# EUROPEAN PATENT SPECIFICATION

(11) **EP 2 248 682 B1**
(45) Date of publication and mention of the grant of the patent: **28.11.2012**
(21) Application number: 09708072.5
(22) Date of filing: 29.01.2009
(51) Int. Cl.: B60C 9/18

(54) **STUDLESS TIRE**
REIFEN OHNE SPIKES
PNEU SANS CLOU

(30) Priority: 04.02.2008 JP 2008023926
(43) Date of publication of application: 10.11.2010
(73) Proprietor: Bridgestone Corporation, Tokyo 104-8340 (JP)
(72) Inventor: WATABE, Ryoichi, Kodaira-shi Tokyo 187-8531 (JP); HAYASHI, Tooru, Kodaira-shi Tokyo 187-8531 (JP)
(74) Representative: Oxley, Robin John George
(86) International application number: PCT/JP2009/051496
(87) International publication number: WO 2009/099000

(56) References cited:
- EP-A1- 0 490 596
- JP-A- 5 162 509
- JP-A- 2001 001 717
- JP-A- 2001 301 421
- JP-A- 2001 347 810
- JP-A- 2005 193 865

## Description

### TECHNICAL FIELD

The present invention relates to a studless tire having a belt layer consisting of two belt plies, the belt plies being disposed such that steel cords thereof are inclined in mutually opposite directions with respect to the equatorial plane between the plies. In particular, the present invention is intended to improve ice performance with a simple configuration.

### RELATED ART

In order to enhance a driving performance on icy and snowy roads, a studless tire is provided with multiple sipes and/or made of extremely soft rubber to suppress the tread rigidity. It is also proposed, for example, that a sidewall portion is composed of two rubber layers (see JP 2001206022 A).
Attention is also drawn to the disclosure of EP0,490,596

### DISCLOSURE OF THE INVENTION

However, the tire with such a configuration has a drawback that the production cost is inevitably increased due to complicate tire structure and material used. The present invention addresses this drawback, and is intended to provide a studless tire capable of enhancing ice performance without complicating the structure and the material.

<1> A studless tire according to the present invention has a belt layer consisting of two belt plies, the belt plies being disposed such that steel cords thereof are inclined in mutually opposite directions with respect to the equatorial plane between the plies and is **characterized in that** a width of a radially outwardly disposed belt ply of said belt plies is 60%-70% of a maximum tire width.

<2> In the studless tire described in <1>, the width of the radially inwardly disposed belt ply is 24 mm-36 mm larger than the width of the radially outwardly disposed belt ply.

<3> In the studless tire described in <1> or <2>, a ratio of a tread width to the width of the radially outwardly disposed belt ply is 105%-125%.

According to the tire described in <1>, the width of the radially outwardly disposed belt ply of said belt plies is 60%-70% of the maximum tire width, so that a leading angle, which is an angle between a road surface and a tread periphery at a leading side as viewed in the sectional side view of the tire, is reduced due to a decreased belt rigidity while securing a driving stability. This suppresses intakes of water produced by a contact between the tire and the road surface upon driving on icy roads into groove portions of the tread. When the width of the radially outwardly disposed belt ply is less than 60% of the maximum tire width, the belt rigidity is undesirably low to deteriorate the driving stability. On the other hand, when the he width of the radially outwardly disposed belt ply is more than 70% of the maximum tire width, the belt rigidity is undesirably high to eliminate the effect of limiting the intakes of water.

According to the tire described in <2>, the width of the radially inwardly disposed belt ply is 24 mm-36 mm larger than the width of the radially outwardly disposed belt ply. This is because when the difference is less than 24 mm, the width of the radially inwardly disposed belt ply becomes so small that the entire belt rigidity is decreased to deteriorate the driving stability. On the other hand, when the difference is more than 36 mm, the width of the radially inwardly disposed belt ply becomes so large that the entire belt rigidity is excessively large and thus the leading angle is not sufficiently small. In addition, the end portions of the radially inwardly disposed belt ply largely move along with a change in a sectional shape of the tire in each turn during running on a road, which potentially causes a belt end separation.

According to the tire described in <3>, the ratio of a tread width to the width of the radially outwardly disposed belt ply is 105%-115%, so that the tire described in <1> in which the belt rigidity is reduced to make the ground contact length of the tire longer than that of a conventional tire can have a smaller ground contact width with same ground contact area. Thus, a wedge effect against snowy roads can be enhanced to improve a gripping performance. When the ratio is less than 105%, the tread width becomes so small that the tread rigidity is decreased to deteriorate the driving stability. On the other hand, when the ratio is more than 115%, the tread width becomes so small that the above-mentioned wedge effect cannot be exerted.

### BRIEF DESCRIPTION OF THE DRAWINGS

FIG. 1 is a sectional view of a studless tire according to an embodiment of the present invention taken along a plane passing the central axis of the tire; and
FIG. 2 is a schematic view of the tire in a ground contact state.

### REFERENCE SYMBOLS

- 1: tread portion
- 2: sidewall portion
- 3: bead portion
- 4: bead core
- 5: radial carcass
- 5a: body portion of the radial carcass 5
- 5b: turn-up portion of the radial carcass 5
- 6: bead filler
- 7: tread rubber
- 8: belt
- 10: studless tire
- 11: first belt ply
- 12: second belt ply
- 20: dial gauge
- θ: leading angle

### BEST MODE FOR CARRYING OUT THE INVENTION

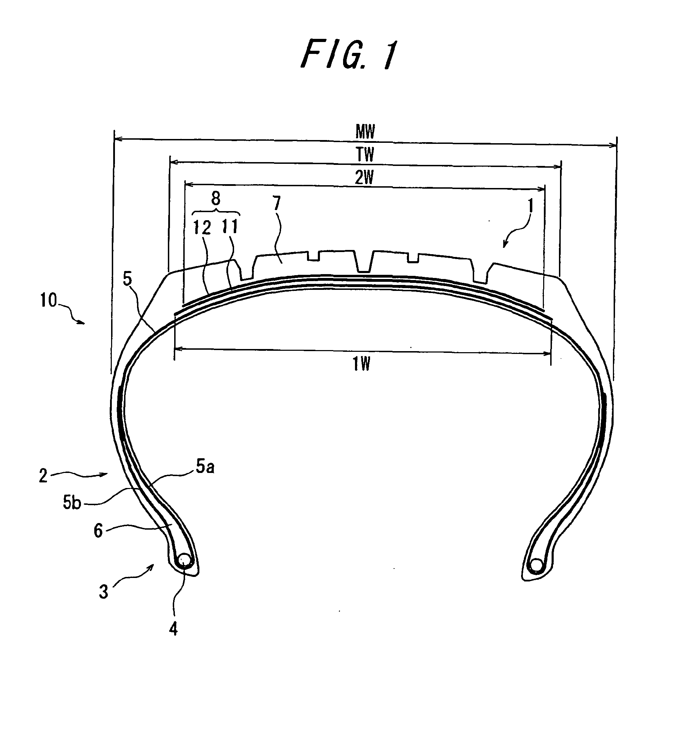

FIG. 1 is a sectional view of a studless tire according to an embodiment of the present invention taken along a plane passing the central axis line. The studless tire 10 has a tread portion 1, a pair of sidewall portions 2 connected to end portions of the tread portion 1 and extending radially inwardly, bead portions 3 disposed at inner peripheries of the sidewall portions 2, and bead cores 4 embedded in the respective bead portion 3. A radial carcass 5 composed of at least one carcass ply toroidally extends between the bead cores, and each end portion of the radial carcass is turned around the bead core outwardly in the radial direction. A bead filler 6 is arranged between a body portion 5a and a turn-up portion 5b and adjacent to the outer periphery of the bead core. The tread portion 1 is provided with a tread rubber 7 forming the ground contact area, radial carcass 5, and a belt 8 disposed between the radial carcass 5 and the tread rubber 7.

The belt 8 is configured by radially stacking two layers of belt plies which have cords arranged to incline in mutually opposite directions with respect to the equatorial plane between the plies. Hereinafter, the belt ply 11 disposed radially inside is referred to as the first belt ply, and the belt ply 12 disposed radially outside is referred to as the second belt ply.

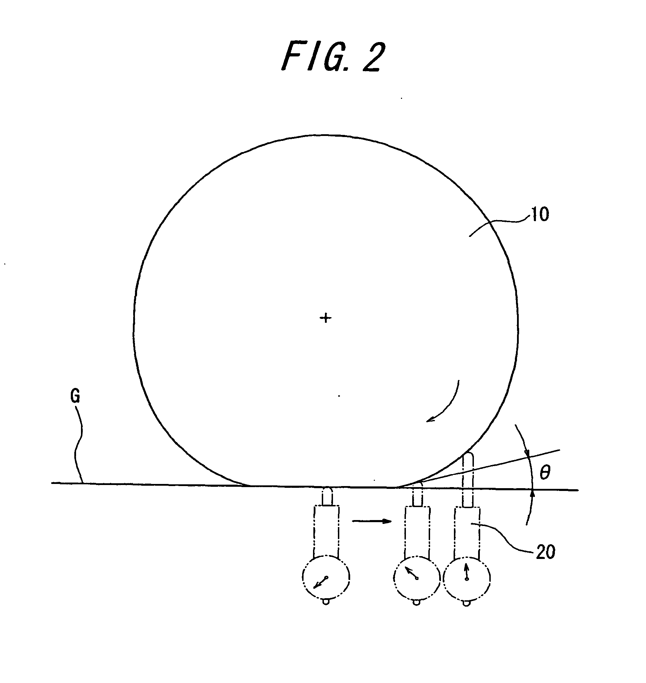

The present invention is based on the tire having the above-mentioned configuration and **characterized in that** a width 2W of the second belt ply 12 is 60%-70% of a maximum tire width MW. Since the width of the second belt ply 12 is 70% or less, the belt rigidity is remarkably decreased to reduce a leading angle, which is an angle θ between a ground contact surface G and a tread periphery at a leading side as viewed in the sectional side view of the tire, as illustrated in FIG. 2. This suppresses intakes of water produced by a contact between the tire and the road surface upon driving on icy roads into groove portions of the tread.

When the ratio of the width 2W of the second belt ply to the tire maximum tire width MW is more than 70%, the leading angle becomes undesirably large so that performances necessary for driving on icy roads cannot be secured. On the other hand, when the ratio is less than 60%, the belt rigidity is undesirably decreased to deteriorate the driving stability.

It is noted that the maximum tire width MW, the widths 1W, 2W of the belt plies are the widths measured under a condition where the tire is mounted on the predetermined rim and a predetermined inner pressure is charged therein. The widths 1 W, 2W of belt plies are rectilinear distances measured from one belt ply end to the other belt ply end along the direction perpendicular to the equatorial plane, not measured along the belt ply.

In this connection, the predetermined inner pressure and rim are defined in the following manner. That is, the predetermined internal pressure refers to an air pressure corresponding to a predetermined at an applicable size load and specified in a predetermined industrial standard, and the predetermined rim refers to a standard rim (or "approved rim", "recommended rim") for an applicable size specified the same industrial standard. The above-mentioned predetermined load refers to a maximum load (maximum load capacity) of a single wheel of an applicable size specified in the same industrial standard.

Regarding the industrial standard, an effective standard is set in each region where the tire is manufactured or used. Examples of such standards are "The Tire and Rim Association Inc. Year Book" (including design guides) in the U.S.A., "The European Tyre and Rim Technical Organisation Standards Manual" in Europe, and "JATMA YEAR BOOK" edited by the Japan Automobile Tyre Manufacturer Association in Japan.

The reason why the width range of the second belt ply 12 is determined on the basis not of the tread width or the width of the first ply 11 but of the maximum tire width is that the maximum tire width is a base dimension of the tire width and can be definitely identified from the tire size The belt rigidity derived from the width of the second belt ply 12 affects the above-mentioned leading angle not complexly with other materials but directly. For this reason, the dimension uniquely determined when the size is specified is used as a standard.

In the studless tire 10, the width 1 W of the first belt ply 11 is 24 mm-36 mm larger than the width 2W of the second belt ply 12. This means that the width 2W of the second belt ply 12 is smaller than that of a conventional tire wile the width 1W of the first belt ply is substantially the same as the conventional width. Therefore, the rigidity of the entire belt 8 can be optimally maintained. When the difference between the width 1 W of the first belt ply 11 and the width 2W of the second belt ply 12 is less than 24 mm, the rigidity of the belt becomes so large that the leading angle is too large to obtain a sufficient ice performance. On the other hand, when the difference is more than 36 mm, the width of the radially inwardly disposed belt ply becomes so large that the entire belt rigidity is excessively large and thus the leading angle is not sufficiently small. In addition, the end portions of the radially inwardly disposed belt ply largely move along with a change in a sectional shape of the tire in each turn during running on a road, which potentially causes a belt end separation.

Moreover, the ratio of the width 2W of the second belt ply to the tread width TW is preferably 80%-95%. When the ratio is less than 80%, the tread width TW is so small that the surface pressure is decreased to lower the traction performance on snow. On the other hand, when the ratio is more than 95%, the tread width is so small that the driving stability on dry roads is deteriorated.

Further, modulus of dynamic elasticity of the tread rubber 7 of the above-mentioned tire is preferably 3 MPa-20 MPa. Modulus of dynamic elasticity of the tread 7 of a summer tire which is not intended to driving on icy and snowy roads is within a range of 25 MPa-50 MPa. When the modulus of dynamic elasticity of the tread portion of a studless tire which is intended to driving on icy and snowy roads is less than 20 MPa, the tread rubber 7 is easily deformed. As a result, the ground contact area is enlarged to increase the coefficient of friction on ice. However, when the modulus of dynamic elasticity is less than 3 MPa, the tread rubber becomes excessively soft to extremely deteriorate the driving stability.

### EXAMPLES

Studless tires having different widths 2W of the second belt ply were experimentally prepared, and leading angles, on-ice feeling, on-ice braking performance, stability feeling during straight running and driving stability feeling were tested. The widths 2W of the second belt ply, ratios 2W/MW (%) of the width 2W of the second belt ply to the maximum tire width MW and test results are shown in Table 1.

The specifications common to the prepared test tires are as follows:
Tire Size: 195/65R15
Maximum tire width MW: 198 mm
Width of the first belt ply 1W: 153mm
Tread width TW: 153 mm
Cord angle of the belt ply with respect to the equatorial plane: 24 degrees
Belt cord: steel (twisted structure: 1x3)

The leading angle was measured in the following manner. That is, a dial gauge 20 was moved along the contact surface to obtain a profile from a non-contact portion of the tire to a contact portion in regard to the tire of the distance from the contact surface G to the tire, and the leading angle was calculated on the basis of the profile thus obtained.

The above-mentioned various tests were carried out with the tire being mounted on the predetermined rim, charged with the predetermined internal pressure and installed to an actual vehicle.

The on-ice feeling was comprehensively evaluated by a driver based on braking performance, start performance, straight-running performance and cornering performance. The results are indicated in index values in Table 1 with the result of comparative example 2 being set to 100.

The on-ice braking performance was evaluated by measuring the braking distance from 20 km/h at full brake application. The results are indicated in index values in Table 1 with the result of comparative example 2 being set to 100.

The driving stability feeling was comprehensively evaluated by the drive based on response and stability upon steering during straight running on a dry test course. The results are indicated in index values in Table 1 with the result of comparative example 2 being set to 100.

**Table 1**

| | Comparative Example 1 | Example 1 | Example 2 | Example 3 | Comparative Example 2 |
|---|---|---|---|---|---|
| Width of the second belt ply 2W (mm) | 116 | 119 | 129 | 139 | 141 |
| 2W/MW (%) | 59 | 60 | 65 | 70 | 71 |
| Leading angle (degree) | 2 | 2 | 6 | 11 | 12 |
| On-ice feeling | 105 | 105 | 102 | 100 | 100 |
| On-ice braking performance | 106 | 106 | 104 | 102 | 100 |
| Driving stability feeling | 90 | 98 | 98 | 100 | 100 |

## Claims

1. A studless tire having a belt layer consisting of two belt plies, the belt plies being disposed such that steel cords thereof are inclined in mutually opposite directions with respect to the equatorial plane between the plies, wherein a width of a radially outwardly disposed belt ply of said belt plies is 60%-70% of a maximum tire width.

2. The studless tire according to claim 1, wherein the width of the radially inwardly disposed belt ply is 24 mm-36 mm larger than the width of the radially outwardly disposed belt ply.

3. The studless tire according to claim 1 or 2, wherein a ratio of a tread width to the width of the radially outwardly disposed belt ply is 105%-125%.

## Patentansprüche

1. Reifen ohne Spikes, der eine Gürtellage hat, die aus zwei Gürtelschichten besteht, wobei die Gürtelschichten derart angeordnet sind, dass die Stahlkords derselben in wechselseitig entgegengesetzten Richtungen in Bezug auf die Äquatorialebene zwischen den Schichten geneigt sind, wobei eine Breite einer in Radialrichtung nach außen angeordneten Gürtelschicht der Gürtelschichten 60 % bis 70 % einer maximalen Reifenbreite beträgt.

2. Reifen ohne Spikes nach Anspruch 1, wobei die Breite der in Radialrichtung nach innen angeordneten Gürtelschicht 24 mm bis 36 mm größer ist als die Breite der in Radialrichtung nach außen angeordneten Gürtelschicht.

3. Reifen ohne Spikes nach Anspruch 1 oder 2, wobei ein Verhältnis einer Laufflächenbreite zu der Breite der in Radialrichtung nach außen angeordneten Gürtelschicht 105 % bis 125 % beträgt.

## Revendications

1. Bandage pneumatique non clouté, comportant une couche de ceinture comprenant deux nappes de ceinture, les nappes de ceinture étant agencées de sorte que leurs câblés d'acier sont inclinés dans des directions mutuellement opposées par rapport au plan équatorial entre les nappes, une largeur d'une nappe de ceinture agencée radialement vers l'extérieur desdites nappes de ceinture représentant 60% à 70% d'une largeur maximale du bandage pneumatique.

2. Bandage pneumatique non clouté selon la revendication 1, dans lequel la largeur de la nappe de ceinture agencée radialement vers l'intérieur est supérieure de 24 mm à 36 mm à la largeur de la nappe de ceinture agencée radialement vers l'extérieur.

3. Bandage pneumatique non clouté selon les revendications 1 ou 2, dans lequel un rapport entre une largeur de la bande de roulement et la largeur de la nappe de ceinture agencée radialement vers l'extérieur est compris entre 105% et 125%.
